# EUROPEAN PATENT APPLICATION

(11) **EP 4 840 579 A2**
(43) Date of publication of application: **18.11.2026**
(21) Application number: 26199340.6
(22) Date of filing: 27.05.2022
(51) Int. Cl.: B23K 26/70

(54) **LASER IRRADIATION APPARATUS, LASER IRRADIATION METHOD AND LASER IRRADIATION PROCESSED SURFACE**

(30) Priority: 03.06.2021 JP 2021093955
(62) Document number(s) of the earlier application(s) in accordance with Art. 76 EPC: 22815994.3 / 4 349 522
(71) Applicant: Toyokoh Co., Ltd., Fuji-shi, Shizuoka 417-0047 (JP)
(72) Inventor: MOMI, Kenjiro, Fuji-shi, Shizuoka, 417-0047 (JP); HARAGUCHI, Manabu, Fuji-shi, Shizuoka, 417-0047 (JP); TOSUE, Momo, Fuji-shi, Shizuoka, 417-0047 (JP)
(74) Representative: Kraus & Lederer PartGmbB

(57) **Abstract**

PROBLEM TO BE SOLVED: To provide a laser irradiation apparatus which can suppress a local deterioration of surface quality of an irradiation object.

SOLUTION: A laser irradiation apparatus irradiates an irradiation object O with a laser beam L. The apparatus comprises scanning pattern formation sections 20, 50 that change at least either of an emitting direction and a shift amount (size) of a laser beam periodically so that a position BS irradiated with a laser beam moves periodically along a predetermined scanning pattern C on a predetermined plane. And the apparatus comprises an irradiation control section 110 (TIG. 2) that stops irradiation of a laser beam directed to an excessive irradiation prevention area PA set in some area in the scanning pattern or makes an intensity of the laser beam lower in comparison with an intensity of a laser beam directed to an area other than the excessive irradiation prevention area.

## Description

### [Technical field]

The present invention relates to a laser irradiation apparatus and a laser irradiation method in which a laser is irradiated in a manner that an irradiated portion (an irradiation spot) scans a surface of an irradiation object, and a laser irradiation processed (treated) surface.

### [Background of the Invention]

As a technique related to a surface processing using a laser beam, in Patent Document 1 for example, there is described that an irradiation head for irradiating a laser beam onto an processing object is provided with a wedge prism for deflecting a laser beam by a predetermined angle, and the laser beam is irradiated while rotating the wedge prism, thereby rotationally scanning the surface of the processing object, and removing (cleaning) old paint films and foreign matters or the like adhered to the surface of the processing object.

### [Prior art reference]

### [Patent document]

Patent document 1: International Publication WO2013/133415

### [Summary of the invention]

### [Problem to be solved by the invention]

In the technique described in Patent document 1, in a state in which an irradiated portion (beam spot) of a laser beam rotates (swirls) along a predetermined irradiation circle on a surface of an irradiation object, the irradiation head is moved laterally or oscillated up and down, left and right etc., and thus removing deposits on the surface of the irradiation object or the surface of the irradiation object, or to perform surface processing (treatment) on the irradiation object.

In this situation, in a region apart from the center of the irradiation circle (for example, in the vicinity of upper and lower ends when the irradiation circle moves in the horizontal direction), laser irradiation, in a form in which an irradiated portion advances almost in parallel with the moving direction of the center of an irradiation circle, overlaps more than the other parts, thus, in some cases, deeper irradiation marks (grooves) are formed than the other parts.

Besides, for example, in a case where an operator holds the irradiation head in his / her hand to perform processing, in a region (stagnant region) in which the moving speed of the irradiation head is lower than other regions, laser irradiation times become locally larger than other portions, thus, a lap ratio which is an index indicating a degree of overlapping of passing tracks of irradiated portions, increases, and a deep irradiation mark may be formed.

It is desired to prevent forming of deep irradiation marks as described above by preventing local increasing of times of laser irradiation, and it is desired to make the laser irradiation state uniform and to improve the surface quality.

In view of the above-described problems, an object of the present invention is to provide a laser irradiation apparatus, a laser irradiation method, and a laser irradiation processed surface in which local deterioration of surface quality of an irradiation object is suppressed.

### [Means for solving the problem]

According to an aspect of the present invention, there is provided a laser irradiation apparatus comprising, a scanning pattern forming section configured to periodically change at least one of an emission direction and a shift amount (size) of the laser light so that an irradiated portion of the laser light periodically moves on a predetermined plane along a predetermined scanning pattern, and an irradiation control section for stopping the irradiation of the laser beam directed to an excessive irradiation prevention area set in a partial region in the scanning pattern or reducing the intensity of the laser beam directed to the excessive irradiation prevention area than a laser beam directed to a region other than the excessive irradiation prevention area.

According to this, by setting the excessive irradiation prevention area in a place where a local increase in the irradiation times in the scanning pattern is likely to occur, and by stopping the irradiation of the laser light or reducing the intensity of the laser light in the excessive irradiation prevention area, it is possible to suppress local deterioration of surface quality due to a local increase in the irradiation times.

In the present specification, claims etc., the scanning pattern includes both a region to be irradiated with the laser light and a region to be irradiated with the laser light if the emission of the laser light is continued although the irradiation of the laser light is stopped.

Besides, the predetermined plane may be typically a plane including a movement trajectory in a case where the focal position of the laser light moves along the scanning pattern, or, may be another plane parallel to this plane. As an example, in a case where a circular scanning pattern (irradiation circle) is formed by rotating a deflection optical system such as a wedge prism which gives a deflection angle to a laser beam, the predetermined plane can be a plane which is orthogonal to a rotation center axis of the deflection optical system and coincides with or is adjacent to a focal position of the laser beam.

In the aspect of the invention, the excessive irradiation prevention area may be set to such a position where an angle formed between a traveling direction of the irradiated portion with respect to the plane when the laser beam is irradiated and a traveling direction of the scanning pattern with respect to the plane is less than or equal to predetermined value.

According to this, it is possible to appropriately obtain the above-described effect.

For example, in the case of a scanning pattern in which an irradiated portion (beam spot) circles along a predetermined circumference, the traveling direction of the irradiated portion is a moving direction of the irradiated portion along the circumference. The traveling direction of the scanning pattern is the moving direction of the center of the circumference.

In the present invention, the scanning pattern forming section may be provided with a scanning pattern for moving the irradiated portion along a circumference, and the irradiation control section may set the excessive irradiation prevention area to be a region apart from the movement trajectory of the center of the circumference by a predetermined value or more in a radial direction of the circumference perpendicular to the movement trajectory on the plane.

According to this, when the irradiated portion is moved along the circumference, it is possible to effectively obtain the above-described effect by relatively simple control.

When the scanning pattern is formed by changing the deflection angle given to the laser light, the size of the scanning pattern changes according to the distance between the irradiation apparatus and the irradiation object. The above-described predetermined value can be set, in a specific irradiation state as a reference, such as a state (focus state) in which the irradiated portion substantially coincides with the focal position of the laser light.

In the present invention, the scanning pattern forming section may include a deflection optical system that deflects the laser light and rotates around a predetermined rotation center axis. The irradiation control section may stop the irradiation or reduce the intensity of the laser beam when an angular position of the deflection optical system with respect to a traveling direction of the scanning pattern to the plane is within a predetermined range.

According to this, it is possible to appropriately obtain the above-described effect by simple control.

In one aspect of the invention, the scanning pattern forming section may include a galvano scanner having at least one mirror that reflects the laser and swings around a predetermined rotation center axis.

According to this, by using the galvano scanner, it is possible to increase the degree of freedom in setting the scanning pattern and to obtain the above-described effect to improve the surface quality.

In another aspect of the invention, it is possible to adopt a configuration in which a scanning pattern movement direction detection section that detects a movement direction of the scanning pattern with respect to the plane is provided, and the irradiation control section may change a set place of the excessive irradiation prevention area in the scanning pattern according to a change in the movement direction.

According to this, even in a case where the operator etc. changes the feeding direction of the irradiation head for example, it is possible to automatically change the setting position of the excessive irradiation prevention area in the scanning pattern according to the changed feeding direction so that the position becomes appropriate, and convenience is enhanced.

In the present invention, such configuration may be adopted in which a scanning pattern moving speed detection section that detects a moving speed of the scanning pattern with respect to the plane is provided, and the irradiation control section intermittently stops the irradiation of the laser light or intermittently reduces the intensity of the laser light when the moving speed of the scanning pattern is less than or equal to a predetermined value.

According to another aspect of the present invention, there is provided a laser irradiation apparatus including a scanning pattern forming section configured to periodically change at least one of an emission direction and a shift amount (size) of the laser light so that an irradiated portion of the laser light periodically moves on a predetermined plane along a predetermined scanning pattern, a scanning pattern moving speed detection section for detecting the moving speed of the scanning pattern with respect to the plane, and an irradiation control section for intermittently stopping the irradiation of the laser beam or intermittently lowering the intensity of the laser beam when the moving speed of the scanning pattern is less than or equal to a predetermined value.

According to these aspects of the invention, when the moving speed of the scanning pattern is low and there is a concern about an increase in the irradiation times over the entire scanning pattern, by intermittently stopping the irradiation or intermittently reducing the intensity of the laser light, it is possible to suppress local deterioration of the surface quality caused by a local increase in the irradiation times.

In each of the above aspects of the invention, the irradiation control section may be configured to set to increase a ratio of a time during which the irradiation of the laser light is intermittently stopped or the intensity of the laser light is intermittently reduced according to a decrease in the moving speed of the scanning pattern.

According to this, the irradiation times and the energy is set appropriately according to a change of the moving speed of the scanning pattern, thus, it is possible to suppress the deterioration of the surface quality due to the decrease in the moving speed of the scanning pattern.

In the aspect of the invention, an output section may be provided that notifies a user when the moving speed of the scanning pattern is higher than or equal to a predetermined upper limit value that is higher than the aforementioned predetermined value.

According to this, it is possible to prevent an unirradiated region (irradiation omission) from being formed between the latest irradiation track and the previous irradiation track due to an excessively high moving speed of the scanning pattern, and to secure the surface quality.

The present invention may include a lap ratio detection section configured to detect a lap ratio which is an overlap ratio of a passing range of the irradiated portion in first irradiation and second irradiation which are sequentially performed for each cycle of the scanning pattern on the plane. The irradiation control section may be configured to intermittently stop the irradiation of the laser light or intermittently reduce the intensity of the laser light when the lap ratio is greater than or equal to a predetermined value.

According to another aspect of the present invention, there is provided a laser irradiation apparatus including a scanning pattern forming section configured to periodically change at least one of an emission direction and a shift amount (size) of the laser light so that an irradiated portion of the laser light periodically moves on a predetermined plane along a predetermined scanning pattern, a lap ratio detection section configured to detect a lap ratio which is an overlap ratio of a passing range of the irradiated portion in first irradiation and second irradiation which are sequentially performed for each cycle of the scanning pattern on the plane, and, an irradiation control section for intermittently stopping the intensity of the laser beam or intermittently reducing the intensity of the laser beam when the lap ratio is a predetermined value or more.

According to these aspects of the invention, when the moving speed of the scanning pattern becomes low and the lap ratio (rate) becomes large, and there is a concern about an increase in the irradiation times over the entire scanning pattern, by intermittently stopping the irradiation or intermittently stopping the intensity of the laser light, it is possible to suppress local deterioration of the surface quality due to a local increase in the irradiation times.

In each of these aspects of the invention, the irradiation control section may be configured to set a ratio (rate) of a time during which the irradiation of the laser light is intermittently stopped or the intensity of the laser light is intermittently reduced to an irradiation time to increase in accordance with an increase in the lap ratio.

According to this, it is possible to appropriately set the irradiation times and the energy to be irradiated in accordance with the change in the lap ratio corresponding to the change in the moving speed of the scanning pattern, and to suppress the deterioration of the surface quality due to the excessive increase in the lap ratio.

In each of the above aspects, the irradiation control section may be configured to intermittently stop the irradiation of the laser light or intermittently reduce the intensity of the laser light in an irradiation limited region set at a part of the scanning pattern, and sequentially change an area occupied by the irradiation limited region in the scanning pattern.

According to this, by discretely arranging the regions in which the irradiation is intermittently stopped or the intensity of the laser light is intermittently reduced, it is possible to suppress quality dispersion of the surface after the processing.

In the aspect of the invention, it is possible to adopt a configuration including a processing state acquisition section that acquires information regarding a processing state in which the irradiation control section stops the irradiation of the laser light or reduces the intensity of the laser light compared to other regions.

According to this, in a state in which there is no reflected light of the laser light or in a state in which the reflected light is weak, it is possible to acquire information on a processing state by in-process monitoring, thus, for example, it is possible to feed back the information to an irradiation parameter or to stop processing at the time of abnormality, and thus, it is possible to further improve the surface quality.

In this case, the processing state acquisition section may include an imaging section that takes images of the irradiation object surface.

According to this, by image data processing on acquired images, it is possible to appropriately grasp the removal state of the removal target and the formation of the heat affected zone such as an oxide film on the processing surface.

In this case, it is possible to adopt a configuration including a focus detection section that detects a position of a focus of the laser light with respect to a surface of the irradiation object.

According to this, it is possible to deal with for appropriately detecting and correcting the defocus state, and it is possible to secure processing efficiency and surface quality.

In order to achieve the above object, in a laser irradiation method according to an aspect of the present invention, at least one of an emission direction and a shift amount (size) of the laser beam is changed periodically so that an irradiated portion of the laser beam periodically moves on a predetermined plane along a predetermined scanning pattern, and a laser beam irradiation directed to an excessive irradiation prevention area set in a partial region in the scanning pattern is stopped or the intensity of the laser beam is reduced with respect to the laser beam directed to a region other than the excessive irradiation prevention area.

According to another aspect of the present invention, there is provided a laser irradiation method for irradiating an irradiation object with a laser beam, at least one of an emission direction and a shift amount (size) of the laser beam is changed so that a portion irradiated with the laser beam periodically moves on a predetermined plane along a predetermined scanning pattern, and when the moving speed of the scanning pattern with respect to the plane is lower than or equal to a predetermined value, the irradiation of the laser light is intermittently stopped or the intensity of the laser light is intermittently reduced.

According to another aspect of the present invention, there is provided a laser irradiation method for irradiating an irradiation object with a laser beam, at least one of an emission direction and a shift amount (size) of the laser beam is changed so that a portion irradiated with the laser beam periodically moves on a predetermined plane along a predetermined scanning pattern, and when a lap ratio, which is an overlap ratio of a passing region of the irradiated portion in first irradiation and second irradiation sequentially performed for each cycle of the scanning pattern on the plane is greater than or equal to a predetermined value, the laser beam is intermittently stopped or the intensity of the laser beam is intermittently reduced.

In each of these inventions, it is possible to obtain a similar effect as the effect of the invention according to the laser irradiation apparatus described above.

In order to achieve the above object, according to an aspect of the present invention, there is provided a laser irradiation processed surface characterized in that laser irradiation marks, each of which is an arc-shaped groove portion having an irradiation start mark and an irradiation end mark at both ends thereof are periodically arranged along a width direction of the groove portion in a central portion of the arc.

Also in the present invention, it is possible to obtain a similar effect as the effect of the invention according to the laser irradiation apparatus described above.

In the present specification and claims, the "arc" is not limited to a part of the circumference of a perfect circle, and includes a shape corresponding to a part of an ellipse.

### [Effect of the Invention]

As described above, according to the present invention, it is possible to provide a laser irradiation apparatus, a laser irradiation method, and a laser irradiation processed surface in which local deterioration of the surface quality of an irradiation object is suppressed.

### [Brief Description of the Drawings]

FIG. 1 is a cross-sectional view of an irradiation head in a first embodiment of a laser irradiation apparatus to which the present invention is applied.
FIG. 2 is a block diagram schematically showing a system configuration of a laser irradiation apparatus according to a first embodiment;
Fig. 3 is a diagram illustrating an example of a track of a beam spot in the first embodiment.
Fig. 4 is a diagram showing a relationship between a moving direction of an irradiation circle and the irradiation times in the first embodiment.
Fig. 5 is a diagram showing an example of the relationship between the distance from the center of the irradiation circle and the number of irradiations in the first embodiment.
Fig. 6 is a flowchart showing an outline of irradiation control in the laser irradiation apparatus of the first embodiment.
Fig. 7 is a figure showing an example of the movement mode of the irradiation circle on the surface of an irradiation object.
Fig. 8 is a diagram illustrating an example of a switching mode between irradiation and irradiation stop in a case where an irradiation circle is divided and intermittent irradiation control is performed in the first embodiment.
Fig. 9 is a diagram schematically showing an example of an irradiation track in the laser irradiation apparatus of the comparative example and the first embodiment.
Fig. 10 is a diagram schematically showing a laser-irradiated surface of a first embodiment.
Fig. 11 is a diagram showing an example of a distribution of irradiation ranges and irradiation stop ranges on an irradiation circle in the second embodiment of the laser irradiation apparatus to which the present invention is applied.
Fig. 12 is a diagram schematically showing a configuration of a third embodiment of a laser irradiation apparatus to which the present invention is applied.
Fig. 13 is a diagram schematically showing a configuration of a fourth embodiment of a laser irradiation apparatus to which the present invention is applied.

### [Mode for carrying out the invention]

### <First Embodiment>

Hereinafter, a first embodiment of a laser irradiation apparatus, a laser irradiation method, and a laser irradiation processed surface to which the present invention is applied will be described.

In the laser irradiation apparatus and the laser irradiation method of the first embodiment, a surface of an object (irradiation object) is irradiated with a laser beam, and removal of an attached substance attached to the surface, removal of a part of the surface, modification treatment by heat input etc. of the surface and, base surface arrangement by formation of an irradiation mark etc. are performed.

Examples of the irradiation object include, but are not particularly limited to, various metal products such as steel or an aluminum-based alloy products and non-metal products.

For example, in a case where the irradiation object is a structure made of steel, it is possible to remove an old coating film, rust, dirt, salt, or the like attached to the surface (so-called laser cleaning) by the laser irradiation apparatus and the laser irradiation method of the first embodiment.

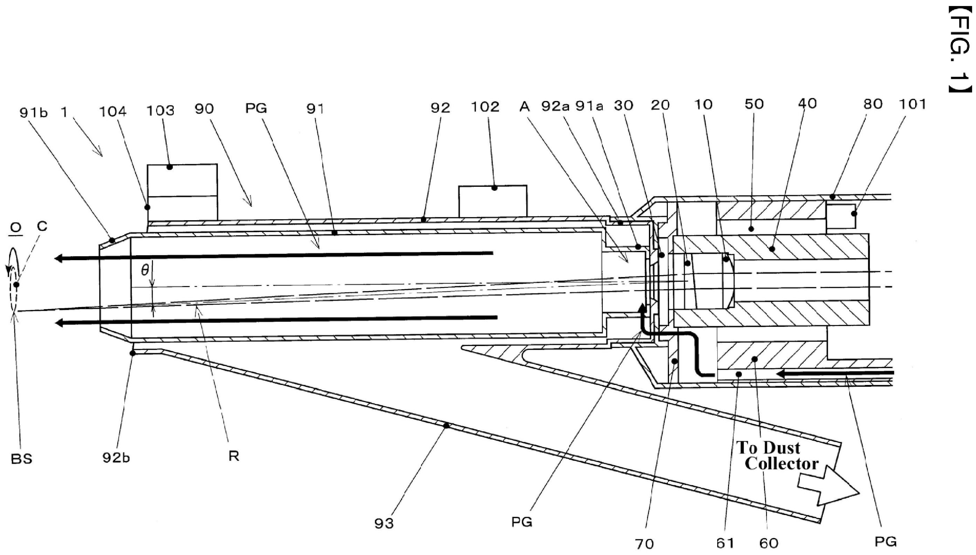

FIG. 1 is a cross-sectional view of an irradiation head in the laser irradiation apparatus of the first embodiment.

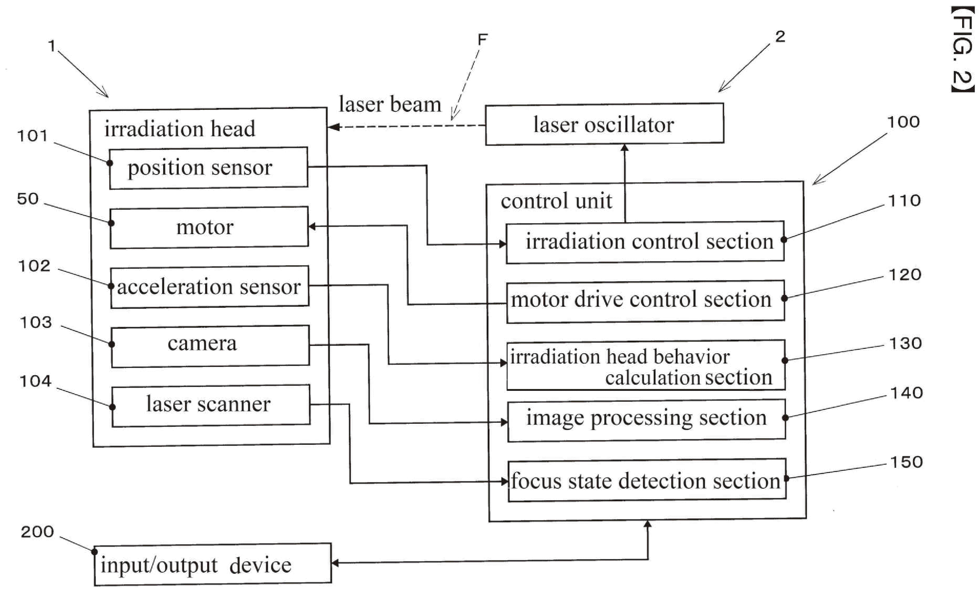

The irradiation head 1 forms a laser beam L by continuous wave (CW) laser light transmitted from the laser oscillator 2 via a fiber F (see FIG. 2), and irradiates an irradiation object O with the laser beam L.

The irradiation head 1 is, for example, a handy type that can be held by an operator to trace a predetermined irradiation path. However, the irradiation head 1 may be attached to a robot that can move the irradiation head 1 along a predetermined path. (see the 3rd embodiment)

Further, in a state where the irradiation head 1 is fixed, the irradiation object O may be relatively displaced with respect to the irradiation head.

The irradiation head 1 includes a focus lens 10, a wedge prism 20, a protective glass 30, a rotary cylinder 40, a motor 50, a motor holder 60, a protective glass holder 70, a housing 80, a duct 90 etc..

The focus lens 10 is an optical element in which the laser beam L transmitted from the laser oscillator 2 to the irradiation head 1 via the fiber F enters after passing through a collimator lens (not shown).

The collimator lens is an optical element that converts (collimates) the laser beam emitted from the end portion of the fiber into a substantially parallel beam.

The focus lens 10 is an optical element for focusing (condensing) the laser beam L emitted from the collimator lens at a predetermined focal position.

As the focus lens 10, for example, a convex lens having a positive power may be used.

A beam spot BS, which is an irradiation spot on the surface of the irradiation object O by the laser beam L, is arranged on a coincident point of the focal point or in a proximity state within the depth of focus (focusing state), or a state separated from the focal position within a predetermined range (defocus state). When the defocus amount is excessively large, the beam spot BS becomes excessively large, and the energy density is reduced. Therefore, correction is necessary from the viewpoint of surface quality and processing (construction) efficiency.

The depth of focus means a range in an optical axis direction in which the beam diameter is less than or equal to a diameter of a predetermined allowable (permissible) circle of confusion.

The wedge prism 20 is an optical element which deflects the laser beam L emitted by the focus lens 10 by a predetermined angle θ (see FIG. 1) and makes the optical axis angles of the incident side and the exit side different.

The wedge prism 20 is formed in a plate shape in which the thickness thereof is continuously changed so that one of the thicknesses in the direction perpendicular to the optical axis direction of the incident side becomes larger than the thickness of the other.

The wedge prism 20 functions as a scanning pattern forming section of the present invention in cooperation with the motor 50.

The protective glass 30 is an optical element made of a flat plate-shaped glass or the like which is disposed close to the wedge prism 20 in the focus position side (the processing object O side and the beam spot BS side) along the optical axis direction.

The protective glass 30 is a protective member which prevents foreign matter, such as a peeled material, dust, or the like, scattered from the processing object O side, from adhering to other optical elements such as the wedge prism 20.

The protective glass 30 is an optical element disposed closest to the focal position along the optical axis direction among the optical systems of the irradiation head 1, and is exposed to the processing object O side via a space portion A and an interior of the duct 90, which will be described later.

The focus lens 10, the wedge prism 20, and the protective glass 30 are formed by coating a surface of a member made of a transparent material such as an optical glass, for example, with a surface coating for preventing reflection and surface protection.

The rotating cylinder 40 is a cylindrical member that holds the focus lens 10 and the wedge prism 20 on the inner diameter side.

The rotary cylinder 40 is formed concentrically with the optical axis of the focus lens 10 and the optical axis of the laser beam L which enters to the focus lens 10 (optical axis of the collimating lens).

The rotary cylinder 40 is rotatably supported by a bearing (not shown), with respect to the housing 80, around a rotation center axis coinciding with an optical axis of the focus lens 10.

The rotary cylinder 40 is formed of, for example, a metal such as an aluminum-based alloy, an engineering plastic or the like.

The motor 50 is an electric actuator which rotationally drives the rotary cylinder 40 around a rotation center axis with respect to the housing 80.

The motor 50 is configured, for example, as an annular motor that is concentric with the rotary cylinder 40 and is provided on an outer diameter side of the rotary cylinder 40.

A stator (not shown) of the motor 50 is fixed to the housing 80 via the motor holder 60 described below.

A rotor (not shown) of the motor 50 is fixed to the rotary cylinder 40.

The motor 50 is controlled by a motor drive section 120 of the control unit 100 such that the rotational speed of the rotary cylinder 40 substantially coincides with a desired target rotational speed.

To maintain a posture of an irradiation head 1 so that a rotation center axis of a rotary cylinder 40 is orthogonal to a surface near an irradiated portion of a processing object O, and the motor 50 rotates a wedge prism 20 together with a rotary cylinder 40. Thus, the beam spot BS is circularly scanned along the surface of the processing object O in an arc shape around the rotation center axis of the rotary cylinder 40.

This circular arc is a scanning pattern in the laser irradiation apparatus of the first embodiment, and will be described as an irradiation circle C.

When the irradiation head 1 is moved translationally along the surface of the processing object O in this state, the beam spot BS scans the surface of the object O while rotating in an arc shape.

Accordingly, when attention is paid to an arbitrary point on the irradiation object O, the laser beam L is incident (the beam spot BS passes) in a pulse form only for a short time, and rapid heating and rapid cooling sequentially occur in a short time.

At this time, deposits and the like adhering to the surface portion of the irradiation object O are crushed and scattered.

The motor holder 60 is a support member that holds the stator of the motor 50 at a predetermined position inside the housing 80.

The main body portion of the motor holder 60 is formed in a cylindrical shape and is fixed to the housing 80 in a state of being inserted into the inner diameter side of the housing 80.

The inner peripheral surface of the motor holder 60 is disposed facing the outer peripheral surface of the motor 50 and is fixed to the stator of the motor 50.

The purge gas flow passage 61 is an opening formed to penetrate a part of the motor holder 60 in the axial direction of the motor 50.

The purge gas PG flowing out from the purge gas flow path 61 is introduced into the inner diameter side of the inner cylinder 91 of the duct 90 via the flow path provided in the housing 80.

The protective glass holder 70 is a member fixed to the inner diameter side of the housing 80 in a state of holding the protective glass 30.

The protective glass holder 70 is formed in, for example, a disk shape in which a circular opening is formed in a central portion.

The laser beam L passes from the wedge prism 20 side to the irradiation object O side through the opening.

On a surface portion of the protective glass holder 70 on the processing object O side, a recessed portion is formed into which a protective glass 30 is fitted.

The protective glass 30 is held inside the housing 80 in a state in which it is fitted into this recess.

The protective glass 30 is detachably attached to the protective glass holder 70 so as to be replaceable when contamination or burnout occurs.

A surface portion of the protective glass holder 70 on the side opposite to the irradiation object O side is opposed to an end surface of the motor holder 60 on the processing object O side with a space.

This space constitutes a part of a flow path (a part of the fluid supply unit) which introduces the purge gas PG introduced from the purge gas flow path 61 of the motor holder 60 into the space portion A on the processing object O side of the protective glass 30.

The housing 80 is a cylindrical member constituting a casing of the main body portion of the irradiation head 1.

In the inside of the housing 80, the focus lens 10, the wedge prism 20, the protective glass 30, the rotary cylinder 40, the motor 50, the motor holder 60, the protective glass holder 70, etc. which were mentioned above are accommodated, also, an end on the irradiation head 1 side of the fiber and the collimate lens, which is not illustrated, are accommodated.

The duct 90 is a double cylindrical member which is provided so as to protrude from an end of the housing 80 on the processing object O side.

The duct 90 includes an inner cylinder 91, an outer cylinder 92, a dust collecting device connecting cylinder 93 etc..

The motor holder 60, the protective glass holder 70, and the housing 80 described above are formed of, for example, a metal such as an aluminum alloy, an engineering plastic or the like.

The inner cylinder 91 is formed in a cylindrical shape.

The laser beam L passes through the inner diameter side of the inner cylinder 91 and is emitted to the irradiation object O side.

At the end of the inner cylinder 91 on the housing 80 side, a small diameter portion 91a is formed in a stepped shape in smaller size than the other portion.

A purge gas PG is introduced into the internal space A of the small diameter portion 91a from the inside of the housing 80.

At an end portion of the inner cylinder 91 on the irradiation object O side, there is formed a tapered portion 91b which is tapered so as to have a smaller diameter toward the processing object O side.

The tapered portion 91b has a function of narrowing down the flow of the purge gas PG and increasing the flow speed while allowing the passage of the laser beam L.

The outer cylinder 92 is a cylindrical member disposed concentrically with the inner cylinder 91 and is provided on an outer diameter side of the inner cylinder 91.

Between the inner peripheral surface of the outer cylinder 92 and the outer peripheral surface of the outer cylinder 91, a continuous gap is formed over the entire circumference.

At the end of the housing 80 side of the outer tube 92, a small diameter portion 92a is formed in a stepped shape and to have a small diameter with respect to the other portions.

The small diameter portion 92a is fixed in a state of being fitted into an end portion of the housing 80 on the irradiation object O side.

An edge of an end 92b of the outer cylinder 92 on the processing object O side is formed to be inclined with respect to a rotation center axis of rotation of the rotary cylinder 40, so that an upper side becomes a housing 80 side relative to the lower side at the time of normal use of irradiation with the rotation center axis of the rotary cylinder 40 being horizontal.

The dust collecting device connecting cylinder 93 is a cylindrical tube body which protrudes from the outer cylinder 92 toward the outer diameter side, and is connected to the inner diameter side of the outer cylinder 92 in the vicinity of the end on the irradiation object O side of the outer cylinder 92 and in a state of communicating with the inner diameter side of the outer cylinder 92.

The dust collector connecting tube 93 is provided below the outer cylinder 92 during the aforementioned normal use.

The dust collector connecting tube 93 is disposed to be inclined with respect to the outer cylinder 92 so as to approach the housing 80 side from the processing object O side and depart (separate) from the outer cylinder 92.

The end of another side of the dust collector connection tube 93 is connected to the dust collector (not shown), and vacuum suction is carried out so that an inside may serve as negative pressure.

FIG. 2 is a block diagram schematically showing a system configuration of the laser irradiation apparatus according to the first embodiment.

The laser irradiation apparatus further includes a laser oscillator 2, a control unit 100, an input / output device 200 etc., in addition to the irradiation head 1 described above.

The laser oscillator 2 is a device that generates a continuous wave (CW) laser.

As the laser oscillator 2, for example, an oscillator having an output of about several kW, such as a laser diode, a fiber laser, a YAG laser, or a CO2 laser, can be used.

The laser oscillator 2 has a function to sequentially switch between emission and emission stop (ON / OFF) of laser light in response to a command from the irradiation control section 110 of the control unit 100, and alter emission output strength in a continuous or stepwise manner.

The control unit 100 is a device that integrally controls various functions of the laser irradiation apparatus.

The control unit 100 can be configured as, for example, a microcomputer including an information processing unit such as a CPU, a storage unit such as a RAM or a ROM, an input / output interface, and a bus for connecting these components.

A position sensor 101, an acceleration sensor 102, a camera 103, a laser scanner 104 etc. are connected to the control unit 100.

The position sensor 101 is provided in the motor 50 and includes an angle encoder that detects an angular position (phase) of the rotor with respect to the stator.

The angular position of the rotor coincides with the angular position of the wedge prism 20.

An irradiation control section 110 of the control unit 100, which will be described later, can detect the angular position of the wedge prism 20 around the rotation center axis based on the output of the position sensor 101.

The acceleration sensor 102 detects acceleration of translational motion of the irradiation head 1 in three orthogonal axis directions (typically, a rotation axis direction of the wedge prism 20 and two axis directions orthogonal to the rotation axis), and angular acceleration around the three orthogonal axes.

The acceleration sensor 102 can be configured to include, for example, a small-sized acceleration sensor and a vibration gyro formed using a three dimensional MEMS process.

The camera 103 is an imaging device that images the surface of the irradiation object O when the irradiation of the laser light is interrupted, which will be described later.

The camera 103 includes, for example, a solid-state imaging element such as a CMOS, an imaging optical system such as a lens group, and an image processing device that processes an output of the imaging element.

The camera 103 is provided, for example, at the distal end portion of the duct 90 of the irradiation head 1 so that an imaging range faces the irradiation object O side.

The laser scanner 104 is a 3D LIDAR that emits a pulsed weak laser beam toward the irradiation object O side while changing the emission direction, and detects the front surface shape of the irradiation object O, the relative position with respect to the irradiation head 1 etc. based on the reflection light.

Based on the output of the laser scanner 104, it is possible to detect the relative position between the focal position of the laser beam L and the irradiation object O (correlated with the defocus amount), and the inclination of the irradiation head 1 with respect to the surface of the irradiation object O.

The control unit 100 includes an irradiation control section 110, a motor drive control section 120, an irradiation head behavior calculation section 130, an image processing section 140, and a focus state detection section 150 etc..

Each of these may be configured to have independent hardware, or may be realized by software that uses common hardware for a plurality of functions.

The irradiation control section 110 controls whether or not the laser oscillator 2 generates a laser beam (on / off of output), and controls an output (intensity) when the laser oscillator 2 generates a laser beam.

The irradiation control section 110 has a function of temporarily stopping the generation of laser light when the position of the beam spot BS on the surface of the irradiation object O is in an excessive irradiation prevention area or the like, which will be described later.

The irradiation control section 110 detects the deflection direction of the laser beam L emitted from the irradiation head 1 based on the output of the position sensor 101, and grasps the angular position (phase) of the beam spot BS on the irradiation circle C.

In addition, the irradiation control section 110 has a function to intermittently stop the generation of the laser beam when the moving speed of the center of the irradiation circle C on the surface of the irradiation object O (the feed speed of the irradiation head 1) is in a predetermined low-speed state based on a calculation result of the irradiation head behavior calculation section 130.

These matters will be described in detail later.

The motor drive control section 120 gives a command to a drive circuit (not shown) of the motor 50 to control rotation or stop of the motor 50 and control a rotational speed of the motor 50 when the motor 50 rotates.

The motor drive control section 120 has a function of performing control so that the actual rotational speed of the motor 50 matches a predetermined target rotational speed set in accordance with the properties of the irradiation object O and the irradiation conditions of the laser beam L.

The irradiation head behavior calculation section 130 integrates the acceleration and the angular acceleration output by the acceleration sensor 102 to calculate the translational movement speed in the three orthogonal axis directions and the angular speed around the three orthogonal axes of the irradiation head 1.

Based on the speed, the angular speed, and the distance between the irradiation head 1 and the irradiation object O, it is possible to calculate the moving direction and the moving speed of the center of the irradiation circle C on the surface of the irradiation object O.

In the following description, the moving direction and the moving speed of the irradiation circle C refer to the moving direction and the moving speed of the center of the irradiation circle C unless otherwise specified.

The irradiation head behavior calculation section 130 functions as a scan pattern movement direction detection section, a scan pattern movement speed detection section, and a lap ratio detection section of the present embodiment in cooperation with the acceleration sensor 102.

The image processing section 140 performs known image processing on the image data output from the camera 103 to determine the state of the surface of the irradiation object O by in-process monitoring.

For example, in an image obtained by imaging the surface of the irradiation object O after irradiation, it is possible to determine a removal state of a removal target such as an old coating film, rust, or dirt, a formation state of an oxide film etc. based on a luminance value or a color (correlation of luminance of each color of RGB) of each pixel.

The focus state detection section 150 recognizes the relative position of the irradiation head 1 with respect to the irradiation object O based on the output of the laser scanner 104, and detects the positional relationship between the focal position of the laser beam L and the surface of the irradiation object O.

The focus state detection section 150 has a function of discriminating between a focus state in which the focal position of the laser beam L is in the vicinity of the surface of the irradiation object O and a defocus state other than the focus state, and calculating a defocus amount in the defocus state.

The focus state detection section 150 has a function of recognizing the inclination of the irradiation head 1 with respect to the surface of the irradiation object O.

In the case where there is such an inclination, when the beam spot BS turns along the irradiation circle, there may be a case where a part of the area is in a focused state and the other part of the area is in a defocused state.

At the time of irradiation processing, it may be sometimes preferable to perform irradiation in a predetermined defocus state. However, when an actual defocus amount is larger than a target defocus amount, correction is necessary.

The image processing section 140 and the focus state detection section 150 function as a processing state acquisition section of the present invention in cooperation with the camera 103 and the laser scanner 104.

An input / output device 200 is connected to the control unit 100 via a wired or wireless communication means.

The input / output device 200 has a function of allowing a user (for example, an operator or a worker) (not illustrated) to input and set various parameters in the laser irradiation apparatus and to check the input parameters.

In addition, the input / output device 200 is provided with a function of notifying the user of an operation state of the laser irradiation apparatus or occurrence of abnormality when an abnormality or the like occurs.

The input / output device 200 can have, for example, a tablet terminal-like configuration including an image display device such as an LCD having a touch panel-type input function, an audio output device, and the like.

Next, an irradiation process in the laser irradiation apparatus of the first embodiment will be described.

In the first embodiment, by rotating the rotary cylinder 40 and the wedge prism 20 while the laser beam L is emitted, the beam spot BS revolves along an irradiation circle C having a predetermined radius on a predetermined plane (typically, a surface of the irradiation object O along a plane orthogonal to the rotation center axis of the wedge prism 20). Hereinafter, the surface of the irradiation object O will be described as an example.

In this state, by relatively translating (moving parallel) the irradiation head 1 along the surface of the irradiation object O or oscillating (swinging) the irradiation head 1 around a predetermined rotation axis, it is possible to perform a process of scanning the surface of the irradiation object O with the beam spot BS in a state in which the irradiation circle C as the scanning pattern moves on the surface at a predetermined feed speed.

When the beam spot BS passes, the surface of the object O to be irradiated is given a spike-like thermal history in which the surface is instantaneously heated and then cooled, and the object to be removed on the surface portion is crushed or melted to be scattered around and removed.

Hereinafter, the definition of the lap ratio (overlap ratio) in the first embodiment will be described.

The lap ratio is a value indicating a rate at which, when the beam spot BS repeatedly passes through a predetermined portion in the scanning pattern, the passage path of the beam spot BS on the surface overlaps the passage path of the beam spot BS in the immediately preceding irradiation.

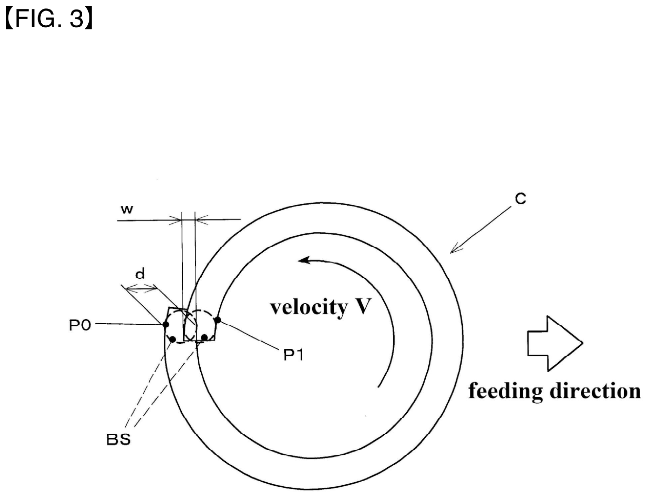

In other words, the lap ratio is calculated for each cycle (one rotation) of the scanning pattern (the irradiation circle C) on the surface of the irradiation object O. It is an overlapping rate of the passage range of beam-spot BS in the first irradiation and the second irradiation sequentially performed in the front-end part or rear-end part of a moving direction (from left-hand side to right-hand side [ being along horizontally / in the case of Fig.3]) of an irradiation pattern.

FIG. 3 is a diagram showing an example of the of tracks (passage, path) of the beam spot BS in the first embodiment.

FIG. 3 shows the tracks of the beam spot BS on a plane which is perpendicular to the rotation center axis of the wedge prism 20 and includes the focal position of the laser beam L.

As shown in FIG. 3, the beam spot BS rotates along the irradiation circle C according to the rotation of the wedge prism 20, and moves in the feed direction of the irradiation head 1 with respect to the irradiation object O.

As a result, when the wedge prism 20 rotates one round (360 °), an offset is generated between the previously irradiated path P0 (the tracks of the beam spot) and the newly irradiated path P1.

Therefore, in the present specification, claims etc., the lap ratio is defined as
(w/d× 100 (%)), that is a ratio of the width w to the diameter d of the beam spot BS (substantially equal to the groove width of the irradiation trace), where the width w is an overlap of the path P0 irradiated immediately before and the most recent path P1.

Here, when the scanning pattern is circular rotation as in the first embodiment, the width w can be defined as a scanning amount (a feed amount of the irradiation head) during a period (one cycle) in which the wedge prism 20 rotates by 360 °.

That is, the lap ratio can be defined as a ratio of the feed speed of the scanning pattern in one cycle of the scanning pattern to the diameter of the beam spot, and for example, in the left and right regions of the turning tracks in FIG. 3, the lap ratio according to this definition substantially coincides with the lap ratio according to the above-described definition.

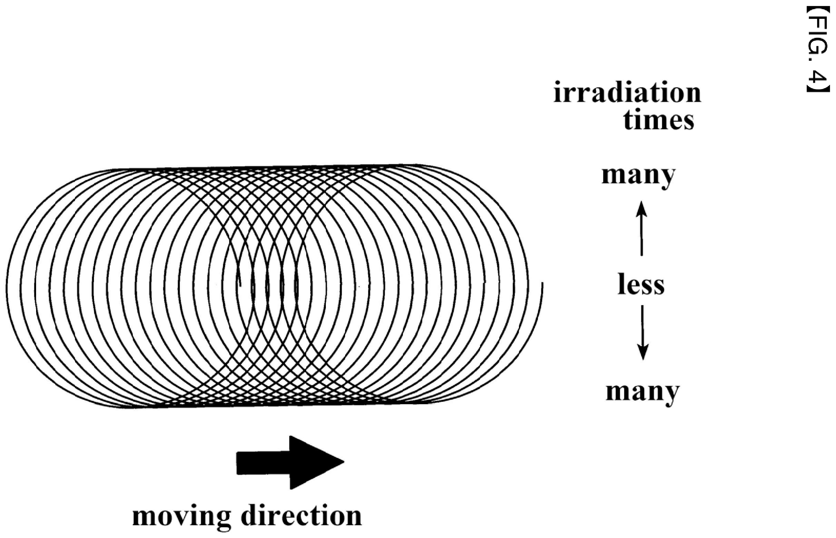

FIG. 4 is a diagram showing the relationship between the moving direction of the irradiation circle and the number of irradiations in the first embodiment.

In FIG. 4, a continuous arc-shaped curve indicates the movement trajectory of the beam spot BS.

As described above, in the case where the beam spot BS has a scanning pattern that turns in an arc shape, in the end portions (upper and lower end portions in FIG. 4) of the irradiation region in the direction orthogonal to the moving direction of the center of the scanning pattern (horizontal direction in FIG. 4), the number of times of laser irradiation is locally increased with respect to other regions.

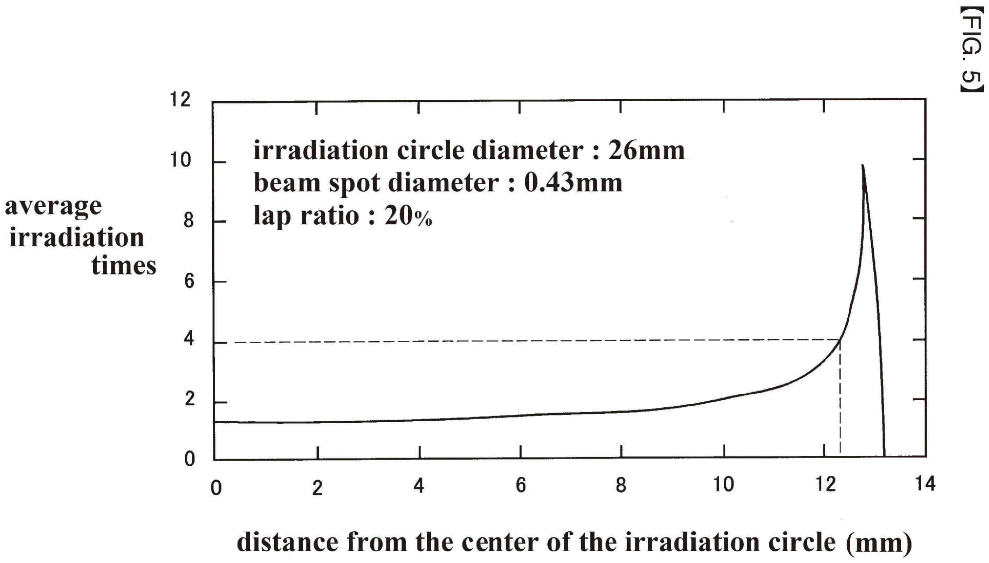

FIG. 5 is a graph showing an example of the relationship between the distance from the center of the irradiation circle and the irradiation times in the first embodiment.

In FIG.5, a horizontal axis shows the distance (vertical direction distance from the horizon which passes along the irradiation circle center in FIG.4) from an irradiation circle center, and the vertical axis shows the number of times of an average irradiation.

In FIG. 5, a state in which the diameter of the irradiation circle is 26mm and the diameter of the beam spot BS is 0. 43mm, and the above-described lap ratio is 20% is taken as an example.

As shown in FIG. 5, it can be seen that the irradiation times locally increases in the vicinity of the upper and lower ends of the irradiation region.

In such a region, deep grooves may be formed on the surface of the irradiation object O due to multiple overlapping of laser irradiation marks in parallel or at a small angle with respect to the feed direction (horizontal direction in FIG. 4), which may cause deterioration in surface quality (variation in surface roughness, formation of heat-affected layers such as oxide films, or the like).

Therefore, in the first embodiment, by the control described below, the occurrence of a region in which the irradiation times locally increases is suppressed.

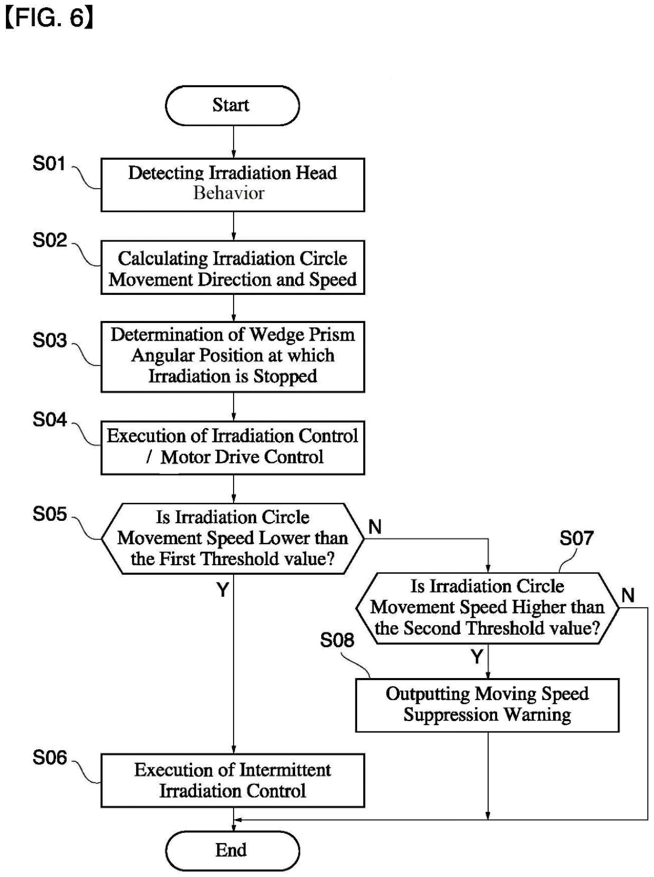

FIG. 6 is a flowchart showing an outline of irradiation control in the laser irradiation apparatus according to the first embodiment.

Hereinafter, each step will be described in order.

### < Step S01: Detecting Irradiation Head Acceleration etc.>

The irradiation head behavior calculation section 130 of the control unit 100 detects translational movement speed of the irradiation head 1 in three orthogonal axis directions and detects angular velocity around three orthogonal axes based on the output of the acceleration sensor 102.

Thereafter, the process proceeds to step S02.

### <Step S02: Calculating Irradiation Circle Movement Direction and Speed >

The irradiation control section 110 of the control unit 100 calculates the moving direction and the moving speed of the center of the irradiation circle C on the irradiation object O based on the behavior of the irradiation head 1 detected in step S01.

For example, when the irradiation head 1 faces the irradiated surface, in order that the rotation center axis of the wedge prism 20 and the normal direction of the irradiated surface coincide with each other, the moving direction and the moving speed of the translational movement of the irradiation head 1 in the two axis directions orthogonal to the rotation center axis of the wedge prism 20 substantially coincide with the moving direction and the moving speed of the center of the irradiation circle C.

When the irradiation head 1 is rotated (swung) about the two axes, the center of the irradiation circle C is moved along the irradiated surface by a movement amount corresponding to the swing angle and the focal length.

Thereafter, the process proceeds to step S03.

### <Step S03: Determination of Wedge Prism Angular Position at which Irradiation is Stopped>

The irradiation control section 110 of the control unit 100 determines the angular position of the wedge prism 20 at which the irradiation of the laser light is stopped, according to the moving direction of the center of the irradiation circle C calculated in step S02.

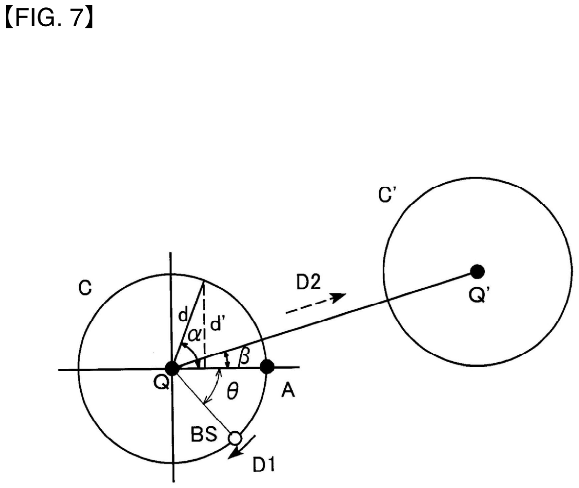

FIG. 7 is a diagram illustrating an example of a movement mode of the irradiation circle on the surface of the irradiation object.

FIG.7 is illustrated on the assumption that the beam-spot BS (irradiated portion) is in a focus condition which corresponds substantially to a focal position of the laser beam L, and, the rotation center axis of the wedge prism 20 is aligned with the normal direction of the surface to be irradiated (the irradiation head 1 is confronting to the surface to be irradiated). That is, the figure shows a state in which the irradiated surface of the irradiation object O is a predetermined plane which is orthogonal to the rotation center axis of the wedge prism 20 and includes the focal position of the laser beam L.

At the time of actual process, depending on the positional relationship between the irradiation head 1 and the irradiation object O, the irradiated surface and the rotation center axis of the wedge prism 20 may be in an inclined state. In this case, the irradiation circle C may have an elliptically deformed shape.

In this case, according to the position on the circumference of the ellipse, the focus state continuously changes (the defocus state partially occurs and the defocus amount changes).

In addition, depending on the positional relationship between the irradiation head 1 and the irradiation object O, a defocus state may occur in which the focal position of the laser beam L is deviated with respect to the irradiation object surface.

Such a defocus state may be sometimes intentionally formed in order to adjust the energy density in the beam spot BS.

Even in such a case, the effect of the present invention can be obtained by performing the irradiation control described below in the laser irradiation apparatus.

In FIG. 7, the radius of the irradiation circle is d.

Here, it is assumed that 0 <d '<d , and, d × sin α = d '.

Further, an angle formed by a straight line Q 'Q connecting the centers of the irradiation circles C before and after the movement and by the straight line QA is defined as *β*. *β* indicates a moving direction of the center of the irradiation circle C caused by the behavior of the irradiation head 1.

The angular position θ of the beam spot BS on the irradiation circle C corresponds to the angular position of the wedge prism 20 detected by the position sensor 101.

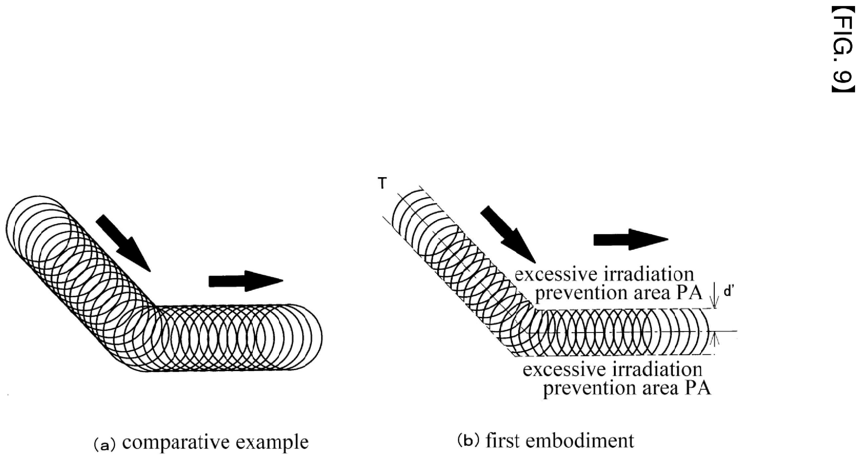

For example, when $α + β ≦ θ ≦ π - α + β$ and $π + α + β ≦ θ ≦ 2 π - α + β$ are satisfied,
the irradiation control section 110 stops the irradiation of the laser light. The region in which the irradiation of the laser light is stopped is an excessive irradiation prevention area PA (see FIG. 9) according to the present invention.

That is, the excessive irradiation prevention area PA is set to be a place where the angle formed by the traveling direction D1 (the moving direction along the tangent of the irradiation circle C) of the beam spot BS, which is the irradiation portion, with respect to the traveling direction D2 of the center of the irradiation circle C, which is the scanning pattern, is less than or equal to a predetermined value.

Thereby, as for the both ends of an irradiation circle C, the distance from the irradiation circle center along the radial direction of the irradiation circle C, the direction being vertical to the moving direction of the center of the irradiation circle C on the plane, becomes more than d', laser radiation can be stopped and the local increase in the number of times of an average irradiation can be suppressed.

For example, as shown in FIG. 5, when the lap ratio is 20%, d´ may be set to about 12. 2mm in order to set the mean irradiation times to 4 or less.

Such an excessive irradiation prevention area is a region in which an angle formed by the traveling direction of the beam spot BS along the irradiation circle C with the rotation of the wedge prism 20 with respect to the traveling direction (feed direction) of the irradiation circle C is less than or equal to a predetermined value (a region in which the traveling direction of the beam spot BS and the traveling direction of the irradiation circle C become close to each other).

The value of d ' can be appropriately set in accordance with irradiation conditions such as the properties of the irradiation object O, the purpose of the laser processing, the laser output, the beam spot diameter, and the rotational speed of the wedge prism 20.

For example, when the uniformity of the surface after the irradiation treatment is important, d ' is preferably set to be relatively small with respect to the irradiation circle diameter d in order to suppress an increase in the average irradiation times.

On the other hand, since a state in which the average irradiation times is locally large may be preferable in terms of efficiency such as removal of deposits (for example, removal of relatively thick rust). In such case, d ' may be set to be relatively large in a state of rough processing (rough peeling) such as an initial stage of irradiation, or d ' may be set to be equal to d so as not to stop irradiation of laser light. In this case, in the finishing step, d ' may be set to be smaller than d to smoothly finish the surface.

Thereafter, the process proceeds to step S04.

### <Step S04: Execution of Irradiation Control / Motor Drive Control>

The irradiation control section 110 and the motor drive control section 120 of the control unit 100 let the laser oscillator 2 to generate a laser beam and let the irradiation head 1 to irradiate the irradiation object O with the laser beam L in a state in which the motor 50 is rotated at a preset target rotational speed.

At this time, the irradiation control section 110 controls the laser oscillator 2 so as to periodically stop the irradiation of the laser light at the angular position of the wedge prism 20 determined in step S03.

Thus, the laser beam L directed to the excessive irradiation prevention area PA is not emitted.

When the irradiation is temporarily stopped in the excessive irradiation prevention area PA, the laser irradiation apparatus can perform in-process monitoring such as imaging of the surface of the irradiation object O by the camera 103 and position measuring of the surface of the irradiation object O by the laser scanner 104.

In a case where the image processing section 140 determines a predetermined surface state (for example, a removal failure of the removal target, formation of an oxide film, or the like) on the basis of the image captured by the camera 103, the determination result is fed back to the irradiation control section 110, and the irradiation parameter such as the output of the laser light can be changed.

When the focus state detection section 150 determines a predetermined defocus state or an inclination of the irradiation head 1 (which causes the occurrence of a periodic defocus state) from the facing state with respect to the irradiation object O, based on the position measuring result by the laser scanner 104, the control unit 100 gives an instruction for correcting the defocus state to a user (not shown) via the input / output device 200 by correcting the relative position and posture of the irradiation head 1 with respect to the irradiation object O.

Thereafter, the process proceeds to step S05.

### <Step S05: Determination of Irradiation Circle Movement Speed (1)>

The irradiation control section 110 of the control unit 100 compares the moving speed of the center of the irradiation circle C on the surface of the irradiation object O with a preset first threshold value.

The first threshold value can be set in consideration of the moving speed at which the lap ratio at the front-end portion in the moving direction in the irradiation circle C is, for example, 25%.

If the moving speed is lower than or equal to the first reference value, the process proceeds to step S06. Otherwise, the process proceeds to step S07.

### <Step S06: Execution of Intermittent Irradiation Control>

An irradiation control section 110 of a control unit 100 calculates a lap ratio at a front- end part in a moving direction in an irradiation circle, and executes intermittent irradiation control for intermittently stopping irradiation of laser light according to the lap ratio.

Table 1 shows an example of the relationship between the lap ratio and the emission state of the laser light.

**[Table 1]**

| lap ratio | 0%~ | 25%~ | 50%~ | 75%~ |
|---|---|---|---|---|
| change of irradiation | irradiation all the time | 1/4 rounds irradiation stop | 1/2 rounds irradiation stop | 3/4 rounds irradiation stop |

As shown in Table 1, a rate of stopping the emission of the laser beam (in other words, the ratio of the emission stop time to the total irradiation time (processing time), which is the sum of the emission time and the emission stop time) is set to increase with an increase in the lap ratio (a decrease in the moving speed of the center of the irradiation circle (scanning pattern) C with respect to the surface of the irradiation object O).

For example, when the lap ratio is 25% or more and less than 50%, the irradiation is stopped during one rotation of the wedge prism 20, and then the irradiation is performed during three rotations.

From here, when the moving speed of the center of the irradiation circle C is lowered and the lap ratio becomes 50% or more and less than 75%, irradiation is stopped during one rotation of the wedge prism 20, and then irradiation is performed in the next rotation, and the number of times (frequency) of stopping irradiation is set to be larger than that when the lap ratio is 25% or more and less than 50%.

When the moving speed of the center of the irradiation circle C further is lowered and the lap ratio becomes 75% or more, the irradiation is stopped during three rotations of the wedge prism 20, and then the irradiation is performed during one rotation, and the number of times (frequency) of stopping the irradiation is set to be larger than that when the lap ratio is 50% or more and less than 75%.

In addition, the irradiation circle C may be divided into a plurality of regions in accordance with the angular position around the center, and irradiation and irradiation stop may be sequentially switched for each region.

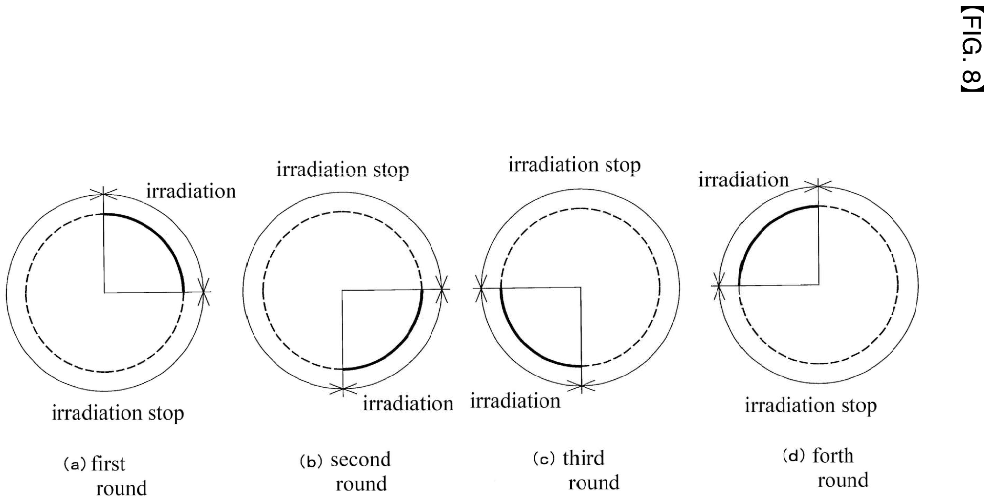

FIG. 8 is a diagram illustrating an example of a switching mode of irradiation or irradiation-stop in a case where an irradiation circle is divided and intermittent irradiation control is performed in the first embodiment.

FIGS. 8(a) to 8(d) show an irradiation region and an irradiation-stop region (irradiation limited region) for each round when the beam spot BS makes one round of the irradiation circle C.

In the present specification, even in a region in which irradiation is stopped, a portion on which a beam spot BS is formed if laser light is emitted is referred to as a beam spot BS for convenience of description. The irradiation circle C also includes a region that is not actually irradiated.

In the example shown in FIG. 8, an irradiation circle showing an irradiation pattern of one cycle is divided into four regions each having a central angle of, for example, 90 °, and each time the beam spot BS makes one rotation, irradiation is sequentially performed one region at a time. A region other than the region where the irradiation is performed is an irradiation stop region where the irradiation is stopped.

The number of divisions of the irradiation circle C and the manner of division are not limited to those described above and can be changed as appropriate. Further, the order of irradiation of the regions and the frequency of irradiation are not particularly limited.

Further, the above-described in-process monitoring may be performed when irradiation is stopped in such intermittent irradiation control.

In the first embodiment, in addition to such intermittent irradiation control, the irradiation-stop in both end portions of the irradiation region (excessive irradiation prevention region PA) described in step S03 is also performed.

After that, the series of processes ends (return).

### <Step S07: Irradiation Circle Movement Speed Determination (2)>

The irradiation control section 110 of the control unit 100 compares the moving speed of the center of the irradiation circle on the surface of the irradiation object O with a preset second threshold (second threshold> first threshold).

The second threshold value can be set in consideration of the moving speed at which the lap ratio at the front-end portion in the moving direction in the irradiation circle is, for example, 0%.

If the moving speed is higher than or equal to the second reference value, the process proceeds to step S08. Otherwise, the series of processes ends (return).

### <Step S08: Outputting Moving Speed Suppression Warning>

The control unit 100 outputs an alarm indicating that the moving speed of the irradiation circle C on the surface of the irradiation object O is in an excessively high state to a user (not shown) via the input / output device 200.

In this state, at least in a partial region of the irradiation circle C, the passing tracks of the beam spot BS does not overlap the passing tracks at the time of the previous circulation of the irradiation circle C, and an unirradiated gap is formed between the passing tracks of the respective circulations (a so-called toothless state).

The alarm can be performed by using, for example, an alarm sound, vibration of a device carried by the operator, or the like in addition to image display.

Further, instead of the output of the alarm or at the same time as the output of the alarm, the emission of the laser beam L may be stopped or the output of the laser beam L may be reduced.

After that, the series of processes ends (return).

Hereinafter, the effect of the first embodiment will be described in comparison with a comparative example of the present invention described below.

In the comparative example and the embodiment described below, the same reference numerals are given to the same portions as those in the previous embodiment, the description thereof will be omitted, and differences will be mainly described.

In the laser irradiation apparatus and the laser irradiation method of the comparative example, the laser beam L is always emitted during the process regardless of the angular position of the wedge prism 20.

FIG. 9 is a diagram schematically illustrating an example of an irradiation track in the laser irradiation apparatus of the comparative example and the first embodiment.

FIGS. 9 (a) and 9 (b) show irradiation track of the comparative example and the first embodiment respectively.

In the comparative example illustrated in FIG. 9 (a), it can be seen that a region in which the irradiation times locally increases is formed at both end portions of the strip-shaped irradiation region formed by the movement of the irradiation circle.

As a result, an excessively deep groove-shaped irradiation mark may be formed on the surface of the irradiation object O, and there is a concern of the surface quality deterioration.

On the other hand, in the first embodiment shown in FIG. 9 (b), since the above-described excessive irradiation prevention area PA is set in the vicinity of both ends of the irradiation area and the irradiation is stopped, a local increase in the irradiation times is suppressed.

Here, the place where the excessive irradiation prevention area PA is set is an area in which a distance d ' in the radial direction of the irradiation circle C orthogonal to the movement tracks is greater than or equal to a predetermined value with respect to the movement tracks T of the center of the irradiation circle C.

Accordingly, it is possible to prevent an excessively deep groove-shaped irradiation mark from being formed and to improve the surface quality.

Next, the laser irradiation processed surface of the first embodiment will be described.

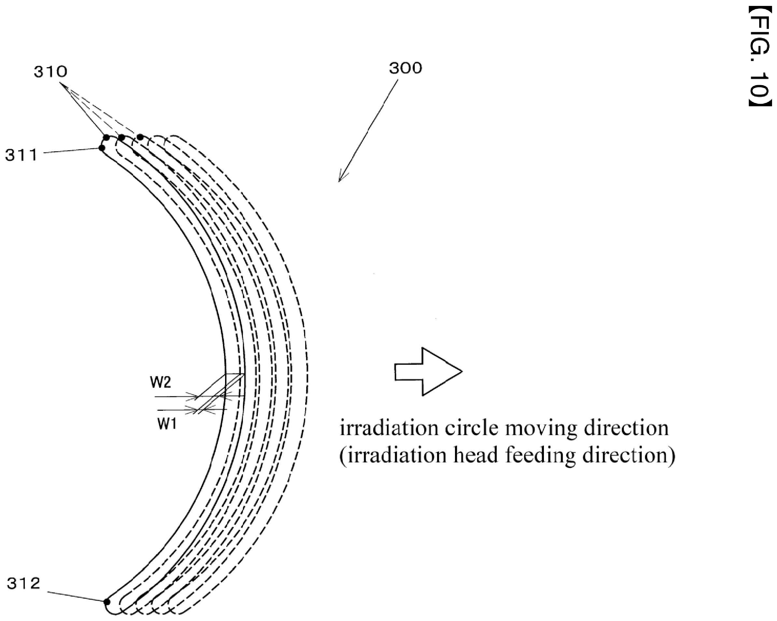

FIG. 10 is a view schematically showing the laser irradiation processed surface of the first embodiment.

When the beam spot BS passes through the laser-irradiated surface 300 of the first embodiment, a base material (for example, a steel material) of the irradiation object O is melted and re-solidified, so that a plurality of groove-shaped irradiation marks 310 are formed on the laser irradiation processed surface 300.

For example, the irradiation marks 310 are formed in an arc shape along the outer circumference of the irradiation circle C, and a plurality of irradiation marks are disposed along the width direction of the center portion in the longitudinal direction.

When the laser irradiation apparatus of the first embodiment is used, actually, an arc that is convex in the moving direction of the irradiation circle and an arc that is convex in the opposite direction are formed to overlap each other, but in FIG. 10, only the former arc is illustrated for ease of illustration and understanding.

An irradiation start mark 311 is formed at one end in the longitudinal direction of the irradiation mark 310 caused by starting of the laser beam L irradiation.

An irradiation stop mark 312 is formed at the other end in the longitudinal direction of the irradiation mark 310 caused by stopping of the laser beam L irradiation.

Both ends of the irradiation mark 310 are interrupted by the irradiation start mark 311 and the irradiation stop mark 312, and are not continuous with other irradiation marks 310.

The center portion of the irradiation mark 310 in the longitudinal direction is overlapped with another adjacent irradiation mark 310 by the overlap width W1 in the groove-width direction.

Here, when the groove length of the irradiation mark 310 itself is W2, W1 / W2 is the above-described lap ratio.

When the rotation center axis of the wedge prism 20 is disposed along the normal direction of the surface to be irradiated, the irradiation mark 310 has an arc shape which is a part of a perfect circle. However, when the rotation center axis is inclined with respect to the normal direction, the irradiation mark 310 has a shape obtained by cutting out a part of an ellipse.

The laser-irradiated surface having such irradiation marks 310 is also included in the technical scope of the present invention.

According to the first embodiment described above, the following effects can be obtained.
(1) The excessive irradiation prevention area PA is set near the both ends of the irradiation circle moving range where the increase in the local number of times of irradiations in the irradiation circle C which is a scanning pattern tends to be generated (part distant from the moving track of the center of the irradiation circle C), and by stopping the irradiation of the laser light, it is possible to suppress local deterioration of the surface quality due to a local increase in the irradiation times .
(2) By setting the excessive irradiation prevention area PA in a region in which the angle formed by the traveling direction of the beam spot BS along the irradiation circle C with respect to the traveling direction of the irradiation circle is less than or equal to a predetermined value, it is possible to appropriately obtain the above-described effect.
(3) By setting the scanning pattern to the irradiation circle C and setting the excessive irradiation prevention area PA at a region apart from the movement tracks of the center of the irradiation circle C by a predetermined value or more, when the beam spot BS is moved along the irradiation circle C, the above-described effect can be effectively obtained by relatively simple control.
(4) The acceleration sensor 102 that detects the movement direction of the irradiation circle C with respect to the irradiation object O and the irradiation head behavior calculation section 130 are provided, and the setting position of the excessive irradiation prevention area PA is changed according to a change in the movement direction. Thus, for example, even when the operator etc. changes the feed direction of the irradiation head 1, the setting position of the excessive irradiation prevention area in the irradiation circle C can be automatically changed so as to be appropriate according to the changed feed direction, and convenience is improved.
(5) By intermittently stopping the irradiation of the laser light when the moving speed of the irradiation circle C with respect to the irradiation object O is lower than or equal to the first threshold value, it is possible to suppress deterioration of the surface quality due to a local increase in the irradiation times even when the moving speed of the irradiation circle C is low and the lap ratio is excessively high.
(6) The ratio (frequency) of the time during which the irradiation of the laser light is intermittently stopped to the irradiation time is set to increase as the moving speed of the irradiation circle C decreases. Thus, the irradiation times and energy to be irradiated are appropriately set according to the change in the moving speed of the irradiation circle C, and the deterioration of the surface quality due to the decrease in the moving speed of the irradiation circle C can be suppressed.
(7) By setting the irradiation limited region in which the irradiation is intermittently stopped at a part of the irradiation circle C and sequentially changing the range occupied by the irradiation limited region in the irradiation circle C, it is possible to discretely and dispersedly arrange the regions in which the irradiation is intermittently stopped and to suppress the quality variation of the surface after the treatment.
(8) When the moving speed of the irradiation circle C, which is the scanning pattern, with respect to the irradiation object is higher than or equal to the second threshold value, the input / output device 200 outputs an alarm. Thus, it is possible to prevent the moving speed of the irradiation circle C from becoming excessively high and to prevent an unirradiated gap from being formed between the latest irradiation track and the previous irradiation track, and to ensure surface quality.
(9) By imaging the irradiation object O by the camera 103 when the irradiation of the laser light is temporarily stopped, it is possible to obtain the surface state of the irradiation object O by in-process monitoring, and it is possible to improve the process quality by feeding back the surface state to the setting of the irradiation conditions etc..
(10) The focus state of the laser beam L on the surface of the irradiation object O is detected by the laser scanner 104 when the irradiation of the laser light is temporarily stopped, and the user is urged to correct the focus state when the defocus state is detected. Thus, the focus state at the time of irradiation becomes favorable, and the process treatment quality can be improved.

### <Second Embodiment>

Next, a second embodiment of a laser irradiation apparatus and a laser irradiation method to which the present invention is applied will be described.

In the second embodiment, the behavior (speed, angular velocity, and the like) of the irradiation head 1 is not detected, and when the beam spot BS on the irradiation circle C is within a predetermined certain angle range, the irradiation of the laser light is periodically stopped at a constant interval.

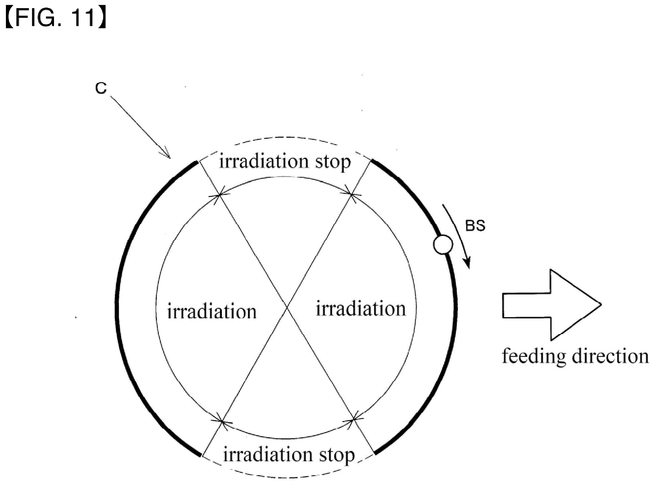

FIG. 11 is a diagram showing an example of a distribution of irradiation ranges and irradiation stop ranges on an irradiation circle in the laser irradiation apparatus of the second embodiment.

In the irradiation circle C, irradiation stop ranges (excessive irradiation prevention ranges) in which the emission of the laser light is stopped are set in advance at two positions on the circumference.

For example, two irradiation stop ranges are set so that the angular positions viewed from the center of the irradiation circle C is shifted by 180 °.

When the angular position of the wedge prism 20 detected by the position sensor 101 corresponds to the irradiation stop range, the irradiation control section 110 gives a command to the laser oscillator 2 to stop the generation of the laser light.

Here, the size of the irradiation stop range (for example, an angular range when viewed from the center of the irradiation circle C) and the position at which the irradiation stop range is set may be configured to be appropriately set by, for example, a user etc..

For example, it is possible to set the position of the irradiation stop range in accordance with the feed direction of the irradiation circle C (the movement direction of the irradiation head 1) in which it is easy for an individual worker to perform construction, or to set the width of the irradiation stop range in accordance with the degree of surface roughness required for process quality.

According to the second embodiment described above, for example, in a case where the movement direction of the irradiation head 1 (the feed direction of the irradiation circle C) at the time of process is determined in advance, it is possible to suppress an increase in the number of times of local irradiation with a simple device configuration and control without detecting the behavior of the irradiation head 1.

In such a configuration, detection means for detecting that the feeding direction of the irradiation circle C is different from a predetermined direction set in advance may be provided, and an alarm or the like may be output when the feeding direction is different from the predetermined direction.

### <Third Embodiment>

Next, a third embodiment of a laser irradiation apparatus and a laser irradiation method to which the present invention is applied will be described.

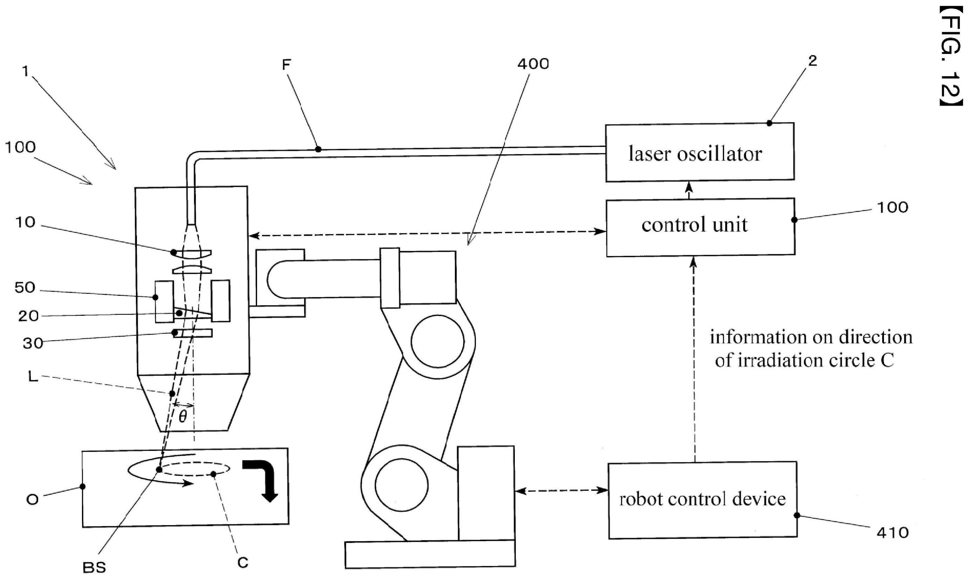

FIG. 12 is a diagram schematically showing a configuration of a laser irradiation apparatus according to a third embodiment.

In the third embodiment, the irradiation head 1 is held and moved by the robot 400. The robot 400 is, for example, a six-axis robot that holds the irradiation head 100 and relatively moves the irradiation head 100 with respect to the irradiation object O so that the irradiation circle C moves on the surface of the irradiation object O according to a predetermined irradiation path.

The robot 400 includes a robot control device 410.

The robot control device 410 integrally controls an actuator (motor) or the like provided in each axis of the robot 400.

The robot control device 410 is configured to include an information processing unit such as a CPU, a storage unit such as a RAM or a ROM, an input / output interface, a bus that connects these units, and the like.

The robot control device 410 holds information on the irradiation path taught in advance, and gives a command to each actuator of the robot 400 so that the irradiation head 1 moves along the processing path at a predetermined feed speed.

In the third embodiment, the robot control device 410 provides information on the moving direction and the moving speed of the irradiation circle C with respect to the irradiation object O to the control unit 100 of the laser irradiation apparatus.

The irradiation control section 110 of the control unit 100 sets the excessive irradiation prevention area and the irradiation limitation area in substantially the same manner as in the first embodiment based on the information on the moving direction and the moving speed of the irradiation circle C obtained from the robot control device 410.

According to the third embodiment described above, the irradiation head 1 is moved by the robot 400. In this case, it is possible to prevent deterioration of surface quality due to an increase in the number of times of local irradiation with a simple configuration.

### <Fourth Embodiment>

Next, a fourth embodiment of a laser irradiation apparatus and a laser irradiation method to which the present invention is applied will be described.

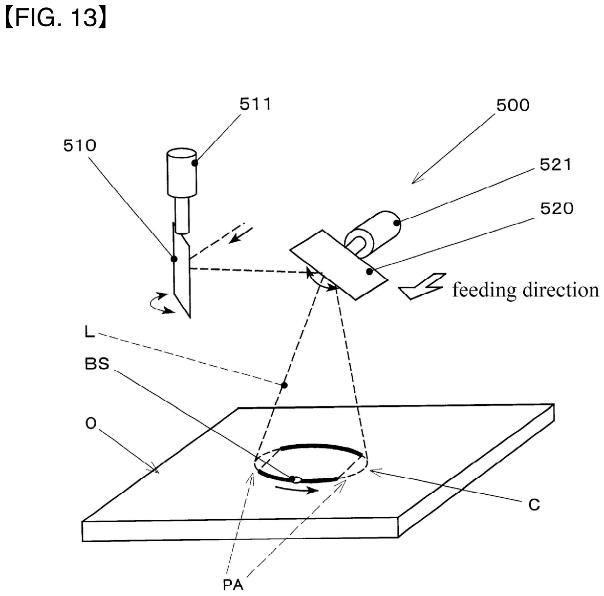

FIG. 13 is a diagram schematically showing a configuration of a laser irradiation apparatus according to a fourth embodiment.

In the fourth embodiment, a scanning pattern (for example, the irradiation circle C) is formed by the galvano scanner 520.

The galvano scanner 500 includes a laser oscillator (not shown) and mirrors 510, 520 that sequentially reflect the laser beam L emitted from the condensing optical system.

Each mirror 510, 520 is supported so as to be swingable about a predetermined rotation center axis, and is driven in a swing direction by each actuator 511, 521.

The rotation center axis of the mirror 510, 520 is disposed at a twisted position, and the beam spot BS can be displaced in a first direction on a predetermined plane (typically, the irradiation object surface of the irradiation object O) by swinging the mirror 510. By swinging the mirror 520, the beam spot BS can be displaced in a second direction different from (typically, orthogonal to) the first direction on the plane.

In the fourth embodiment, each actuator 511, 521 is controlled by a control device (not shown) to synchronously swing each mirror 510, 520 in a predetermined pattern, so that the beam spot BS can be moved in an arbitrary direction on the plane.

Even when the galvano scanner 500 is stationary with respect to the irradiation object O, the irradiation circle C can be moved on the irradiation object surface.

As an example, in the fourth embodiment, as in the first embodiment described above, the irradiation limited area PA is set in a region apart by a predetermined value or more in the radial direction of the irradiation circle C from the moving direction of the center of the irradiation circle C.

Note that the shape of the scanning pattern and the setting of the irradiation limited area PA are not limited to those described above and can be changed as appropriate.

For example, when the angle of the moving direction of the beam spot to the moving direction of a scanning pattern to the irradiation object O is below predetermined value, it can be configured which stops outgoing radiation of the laser beam L, or decrease strength.

According to the fourth embodiment described above, even when the scanning pattern is formed by the galvano scanner 500, it is possible to obtain the same effect as the effect of the first embodiment described above.

### (Modification)

The present invention is not limited to the embodiments described above, and various modifications and changes are possible, and these are also within the technical scope of the present invention.
(1) The configurations of the laser irradiation apparatus, the laser irradiation method, and the laser irradiation processed surface are not limited to the configurations of the above-described embodiments and can be appropriately changed.

For example, it is possible to appropriately change the type of the irradiation object, the purpose of the laser irradiation process, the irradiation conditions etc..

(2) In each of the embodiments, the irradiation of the laser light is temporarily stopped in the excessive irradiation prevention area and the irradiation suppression area. However, instead of this, the intensity of the laser light may be decreased with respect to the normal time.

In addition, when the irradiation of the laser light is stopped and restarted, or when the intensity of the laser light is reduced and recovered, the intensity of the laser light may be gradually changed continuously or in stepwise.

(3) In each embodiment, for example, the irradiation circle which is the circumferential scanning pattern is formed using the rotating wedge prism. However, the shape of the scanning pattern and the method of forming the scanning pattern are not limited thereto and can be appropriately changed.

For example, instead of applying the deflection angle to the laser beam, irradiation may be performed in a state where the laser beam is rotated or in a state where the laser beam is shifted (decentered) in parallel (so-called weaving in which the shift amount (size) is periodically changed).

In addition, the shape of the scanning pattern is not limited to a circle, and may be, for example, a polygon or other shapes.

In addition, the configuration of the optical system that forms the scanning pattern is not particularly limited, and for example, a galvano scanner or a polygon mirror may be used alone or in combination with other methods.

(4) The method of detecting the moving direction and the moving speed of the scanning pattern on the surface of the irradiation object is not limited to the configuration of each embodiment and can be appropriately changed.

(5) The method of performing in-process monitoring when irradiation is stopped and the event to be monitored are not limited to those described in each embodiment and can be appropriately changed.

### [Explanation of letters or numerals]

| | | | |
|---|---|---|---|
| 1 | irradiation head | | |
| 2 | laser oscillator | 10 | focus lens |
| 20 | wedge prism | 30 | protective glass |
| 40 | rotary cylinder | 50 | motor |
| 60 | motor holder | 61 | purge gas flow path |
| 70 | protective glass holder | 80 | housing |
| 90 | duct | 91 | inner cylinder |
| 91a | small diameter portion | 91b | taper portion |
| 92 | outer cylinder | 92a | small diameter portion |
| 92b | end | 93 | dust collector connection tube |
| O | irradiation object | | |
| L | laser beam | BS | beam spot |
| C | irradiation circle (scanning pattern) | | |
| PA | excessive irradiation prevention area | | |
| A | space portion | PG | purge gas |
| 100 | control unit | 101 | position sensor |
| 102 | acceleration sensor | 103 | camera |
| 104 | laser scanner | | |
| 110 | irradiation control section | 120 | motor drive control section |
| 130 | irradiation head behavior calculation section | | |
| 140 | image processing section | | |
| 150 | focus state detection section | | |
| 200 | input/output Device | | |
| 300 | laser irradiation treatment surface | 310 | irradiation mark |
| 311 | irradiation start mark | 312 | irradiation stop mark |
| 400 | robot | 410 | robot control device |
| 500 | galvano scanner | 510, 520 | Mirror |
| 511, 521 | actuator | | |

Moreover, the following embodiments are disclosed
[Embodiment 1] A laser irradiation apparatus for irradiating an irradiation object with a laser beam, comprising:
   a scanning pattern forming section configured to periodically change at least one of an emission direction and a shift amount of the laser beam so that a portion irradiated with the laser beam periodically moves on a predetermined plane along a predetermined scanning pattern; and
   an irradiation control section configured to stop irradiation of the laser beam directed to an excessive irradiation prevention area set in a partial region in the scanning pattern or to reduce an intensity of the laser beam to the excessive irradiation prevention area lower than a laser beam directed to a region other than the excessive irradiation prevention area.
[Embodiment 2] The laser irradiation apparatus according to embodiment 1, wherein
   the excessive irradiation prevention area is set to such a position where an angle formed between a traveling direction of the irradiated portion with respect to the plane when the laser beam is irradiated and a traveling direction of the scanning pattern with respect to the plane is less than or equal to a predetermined value.
[Embodiment 3] The laser irradiation apparatus according to embodiment 1 or 2, wherein
   the scanning pattern forming section is provided with a scanning pattern for moving the irradiated portion along a circumference, and
   the irradiation control section sets the excessive irradiation prevention area to be a region apart from the movement track of the center of the circumference by a predetermined size or more in a radial direction of the circumference perpendicular to the movement track on the plane.
[Embodiment 4] The laser irradiation apparatus according to embodiment 3, wherein
   the scanning pattern forming section includes a deflection optical system that deflects and rotates the laser beam around a predetermined rotation center axis, and
   the irradiation control section stops the irradiation or reduces the intensity of the laser beam when an angular position of the deflection optical system with respect to a traveling direction of the scanning pattern to the plane is within a predetermined range.
[Embodiment 5] The laser irradiation apparatus according to any one of embodiments 1 to 3, wherein
   the scanning pattern forming section includes a galvano scanner having at least one mirror that reflects and swings the laser around a predetermined rotation center axis.
[Embodiment 6] The laser irradiation apparatus according to any one of embodiments 1 to 5 further comprising:
   a scanning pattern moving direction detector configured to detect a moving direction of the scanning pattern to the plane and wherein,
   the irradiation control section changes a setting position of the excessive irradiation prevention area in the scanning pattern according to a change in the moving direction.
[Embodiment 7] The laser irradiation apparatus according to any one of embodiments 1 to 6, further comprising:
   a scanning pattern moving speed detection section configured to detect a moving speed of the scanning pattern with respect to the plane and wherein,
   when the moving speed of the scanning pattern is lower than or equal to a predetermined value, the irradiation control section intermittently stops the irradiation of the laser beam or intermittently reduces the intensity of the laser beam.
[Embodiment 8] A laser irradiation apparatus for irradiating an irradiation object with a laser beam, comprising:
   a scanning pattern forming section configured to periodically change at least one of an emission direction and a shift amount of the laser beam so that a portion irradiated with the laser beam periodically moves on a predetermined plane along a predetermined scanning pattern;
   a scanning pattern moving speed detector configured to detect a moving speed of the scanning pattern with respect to the plane; and
   an irradiation control section configured to intermittently stop irradiation of the laser beam or intermittently reduce intensity of the laser beam when a moving speed of the scanning pattern is lower than or equal to a predetermined value.
[Embodiment 9] The laser irradiation apparatus according to embodiment 7 or 8, wherein
   the irradiation control section sets a ratio of a time during which the irradiation of the laser light is intermittently stopped or the intensity of the laser light is intermittently reduced to a processing time to become larger according to a decrease in the moving speed of the scanning pattern.
[Embodiment 10] The laser irradiation apparatus according to any one of embodiments 7 to 9, further comprising:
   an output section that notifies a user when the moving speed of the scanning pattern is higher than or equal to a predetermined upper limit value that is higher than the predetermined value.
[Embodiment 11] The laser irradiation apparatus according to any one of embodiments 1 to 6, further comprising:
   a lap ratio detection section that detects a lap ratio which is an overlap ratio of a passing range of the irradiated portion in first irradiation and second irradiation which are sequentially performed for each cycle of the scanning pattern on the plane, and wherein,
   the irradiation controller section, when the lap ratio is greater than or equal to a predetermined value, intermittently stops the irradiation of the laser light or intermittently reduces the intensity of the laser beam.
[Embodiment 12] A laser irradiation apparatus for irradiating an irradiation object with a laser beam, comprising:
   a scanning pattern forming section configured to periodically change at least one of an emission direction and a shift amount of the laser beam so that a portion irradiated with the laser beam periodically moves on a predetermined plane along a predetermined scanning pattern;
   a lap ratio detection section configured to detect a lap ratio which is an overlap ratio of a passing range of the irradiated portion in first irradiation and second irradiation which are sequentially performed for each cycle of the scanning pattern on the plane; and
   an irradiation control section that intermittently stops the laser beam or intermittently reduces the intensity of the laser beam when the lap ratio is greater than or equal to a predetermined value.
[Embodiment 13] The laser irradiation apparatus according to embodiment 11 or 12, wherein
   the irradiation control section sets a ratio of a time for intermittently stopping the irradiation of the laser beam or intermittently reducing the intensity of the laser beam compared to an irradiation time to increase according to an increase in the lap ratio.
[Embodiment 14] The laser irradiation apparatus according to any one of embodiments 7 to 13, wherein
   the irradiation control section intermittently stops the irradiation of the laser beam or intermittently reduces the intensity of the laser beam in an irradiation limited region set as a part of the scanning pattern, and sequentially changes a range occupied by the irradiation limited region in the scanning pattern.
[Embodiment 15] The laser irradiation apparatus according to any one of embodiments 1 to 14 further comprising:
   a processing state acquisition section that acquires information on a processing state in which the irradiation control section stops the irradiation of the laser beam or reduces the intensity of the laser beam compared to other regions.
[Embodiment 16] The laser irradiation apparatus according to embodiment 15, wherein
   the processing state acquisition section includes an imaging section that images a surface of the irradiation object.
[Embodiment 17] The laser irradiation apparatus according to embodiment 15 or 16, wherein
   the processing state acquisition section includes a focus detection section that detects a position of a focus of the laser beam with respect to a surface of the irradiation object.
[Embodiment 18] A laser irradiation method for irradiating an irradiation object with a laser beam wherein,
   periodically changing at least one of an emission direction and a shift amount of the laser beam so that a portion irradiated with the laser beam periodically moves on a predetermined plane along a predetermined scanning pattern; and
   stopping irradiation of the laser beam directed to an excessive irradiation prevention area set in a partial region in the scanning pattern, or, reducing intensity of the laser beam directed to the excessive irradiation prevention area compared to the laser beam directed to a region other than the excessive irradiation prevention area.
[Embodiment 19] A laser irradiation method for irradiating an irradiation object with a laser beam wherein,
   periodically changing at least one of an emission direction and a shift amount of the laser beam so that a portion irradiated with the laser beam periodically moves on a predetermined plane along a predetermined scanning pattern; and
   intermittently stopping the irradiation of the laser beam or intermittently reducing intensity of the laser beam when a moving speed of the scanning pattern with respect to the plane is lower than or equal to a predetermined value.
[Embodiment 20] A laser irradiation method for irradiating an irradiation object with a laser beam wherein,
   periodically changing at least one of an emission direction and a shift amount of the laser beam so that a portion irradiated with the laser beam periodically moves on a predetermined plane along a predetermined scanning pattern; and
   intermittently stopping the irradiation of the laser beam or intermittently reducing the intensity of the laser beam when a lap ratio, which is an overlap ratio of a passing range of the irradiated portion in first irradiation and second irradiation sequentially performed for each cycle of the scanning pattern on the plane, is bigger than or equal to a predetermined value.
[Embodiment 21] A laser-irradiation processed surface, wherein
   laser irradiation marks, each of which is an arc-shaped groove portion having an irradiation start mark and an irradiation end mark at both ends are periodically arranged along a width direction of the groove portion in a central portion of the arc.

## Claims

1. A laser irradiation apparatus for irradiating an irradiation object with a laser beam, comprising:
a scanning pattern forming section configured to periodically change at least one of an emission direction and a shift amount of the laser beam so that a portion irradiated with the laser beam periodically moves on a predetermined plane along a predetermined scanning pattern;
an irradiation control section configured to stop irradiation of the laser beam directed to an excessive irradiation prevention area set in a partial region in the scanning pattern or reduce the intensity of the laser beam directed to the excessive irradiation prevention area than a laser beam directed to a region other than the excessive irradiation prevention area, and suppress local deterioration of surface quality due to a local increase in the irradiation times,
the scanning pattern forming section provides a scanning pattern for moving the irradiated portion along a circumference, and
the irradiation control section sets the excessive irradiation prevention area to be a region apart from the movement track of the center of the circumference by a predetermined size or more in a radial direction of the circumference and perpendicular to the movement track on the plane.

2. The laser irradiation apparatus according to claim 1, wherein
the scanning pattern forming section includes a deflection optical system that deflects and rotates the laser beam around a predetermined rotation center axis, and
the irradiation control section stops the irradiation or reduces the intensity of the laser beam when an angular position of the deflection optical system with respect to a traveling direction of the scanning pattern to the plane is within a predetermined range.

3. The laser irradiation apparatus according to any one of claims 1 to 2 further comprising:
a processing state acquisition section that acquires information on a processing state in which the irradiation control section stops the irradiation of the laser beam or reduces the intensity of the laser beam compared to other regions.

4. A laser irradiation method for irradiating an irradiation object with a laser beam wherein,
periodically changing at least one of an emission direction and a shift amount of the laser beam so that a portion irradiated with the laser beam periodically moves on a predetermined plane along a predetermined scanning pattern; and
stopping irradiation of the laser beam directed to an excessive irradiation prevention area set in a partial region in the scanning pattern, or, reducing intensity of the laser beam directed to the excessive irradiation prevention area compared to the laser beam directed to a region other than the excessive irradiation prevention area, and suppressing local deterioration of surface quality due to a local increase in the irradiation times,
the scanning pattern is for moving the irradiated portion along a circumference, and
setting the excessive irradiation prevention area to be a region apart from the movement track of the center of the circumference by a predetermined size or more in a radial direction of the circumference and perpendicular to the movement track on the plane.
